# EUROPEAN PATENT SPECIFICATION

(11) **EP 1 418 075 B1**
(45) Date of publication and mention of the grant of the patent: **24.09.2008**
(21) Application number: 03025360.3
(22) Date of filing: 04.11.2003
(51) Int. Cl.: B60J 5/04, E05F 1/06, E05C 17/20

(54) **Side door structure of vehicle**
Seitentürstruktur für Fahrzeuge
Structure de porte latérale pour véhicule

(30) Priority: 05.11.2002 JP 2002321644
(43) Date of publication of application: 12.05.2004
(73) Proprietor: Mazda Motor Corporation, Aki-gun, Hiroshima 730-8670 (JP)
(72) Inventor: Moriyama, Yukihiro, c/o Mazda Motor Corp., Aki-gun, Hiroshima 730-8670 (JP)
(74) Representative: Müller-Boré & Partner Patentanwälte

(56) References cited:
- EP-A- 0 220 414
- EP-A- 0 348 034
- EP-A- 1 215 064

## Description

### BACKGROUND OF THE INVENTION

### 1. Field of the Invention

The present invention relates to a side door structure applicable to a vehicle body of which side openings are covered by front doors swingably supported by door hinges located at the front of the front doors and by rear doors swingably supported by door hinges located at the rear of the rear doors.

### 2. Description of the Related Art

Such a door structure is for instance known from document EP-A-1 215 064.

There exists also a conventionally known side door structure of a vehicle of which front doors and rear doors covering side openings in a vehicle body are opened frontward and rearward, respectively, as described in Japanese Unexamined Patent Publication No. 2001-138864, for example. In this side door structure (hereinafter referred to as the two-way opening side door structure), the front doors are swingably supported by door hinges located at the front of the front doors and the rear doors are swingably supported by door hinges located at the rear of the rear doors so that they can be opened frontward and rearward, respectively.

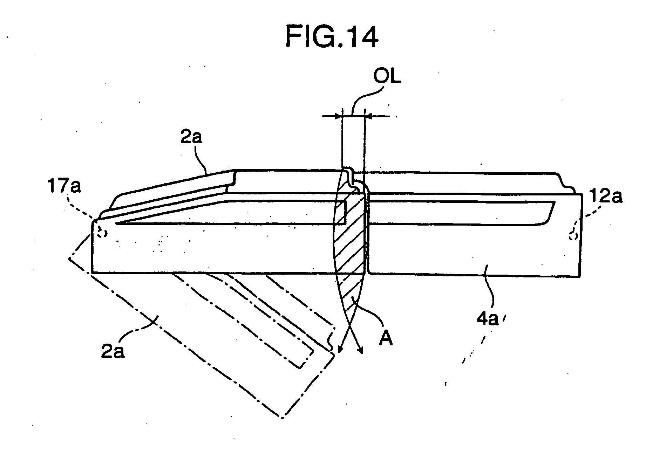

The two-way opening side door structure of the vehicle disclosed in the above-cited Japanese Unexamined Patent Publication No. 2001-138864 is built as follows. When opening a rear door 4a, an occupant first undoes a door lock of a front door 2a and opens the front door 2a to a specific angle as shown by imaginary lines in FIG. 14 to release the front and rear doors 2a, 4a from their interlocked state. Then, the occupant swings the rear door 4a from a closed position to an open position.

Generally, upper portions of side doors (front and rear) of the vehicle are inwardly inclined as viewed from the front of the vehicle so that upper ends of the side doors are located more or less inward toward a center line of the vehicle body largely for design-related reasons. When the front and rear doors 2a, 4a of which upper portions are inwardly inclined are swingably supported by vertically mounted hinge pins 17a and 12a, respectively, as shown in FIG. 14, a rearmost part of the upper end of the front door 2a swings slightly rearward whereas a forwardmost part of the upper end of the rear door 4a swings slightly frontward in an initial stage of opening the respective doors 2a, 4a. This is because the upper ends of the front and rear doors 2a, 4a are positioned inward toward the center line of the vehicle body with respect to longitudinal axes of the hinge pins 17a, 12a.

In addition, the front and rear doors 2a, 4a are installed in such a manner that a rear end of the front door 2a and a front end of the rear door 4a overlap each other by a specific distance OL. Therefore, a swing trajectory of the rear end of the front door 2a and a swing trajectory of the front end of the rear door 4a produced as the respective doors 2a, 4a are opened and closed inevitably overlap over a large area "A" as illustrated (hatched in FIG. 14).

In this structure, the front end of the rear door 4a is apt to interfere with the rear end of the front door 2a when the rear door 4a is opened and, therefore, the occupant has to open the rear door 4a after widely opening the front door 2a to prevent this interference between the front and rear doors 2a, 4a. The conventional two-way opening side door structure has this problem concerning operational ease.

### SUMMARY OF THE INVENTION

This invention is intended to solve the aforementioned problem concerning operational ease of a two-way opening side door structure. Accordingly, it is an object of the invention to provide a two-way opening side door structure of a vehicle capable of holding a rear door at a specific angle in a stable fashion with a simple construction.

A side door structure of the invention is applicable to a vehicle of which side openings are covered by a front door swingably supported by a door hinge located at the front of the front door and by a rear door swingably supported by a door hinge located at the rear of the rear door. The side door structure includes a door checker for holding the front door at an open position situated on the outside of but close to a swing trajectory of the rear door.

The door checker of this side door structure holds the front door at the open position situated slightly on the outside of the swing trajectory of the rear door. This structure effectively prevents a front end of the rear door from interfering with a rear end of the front door when an occupant opens the rear door.

These and other objects, features and advantages of the invention will become more apparent upon reading the following detailed description along with the accompanying drawings.

### BRIEF DESCRIPTION OF THE DRAWINGS

FIG. 1 is a side view showing a side door structure of a vehicle according to a specific embodiment of the invention;
FIG. 2 is a plan view showing the side door structure of FIG. 1;
FIG. 3 is an explanatory diagram showing how a rear door is supported as viewed from the front of the vehicle;
FIG. 4 is a sectional plan view showing a specific construction of a door checker for a front door;
FIG. 5 is a sectional side view showing the construction of the door checker for the front door;
FIG. 6 is a sectional plan view showing a specific construction of a door checker for the rear door;
FIG. 7 is a sectional side view showing the construction of the door checker for the rear door;
FIG. 8 is an explanatory diagram showing how the front door swings as it is opened and closed;
FIG. 9 is an explanatory diagram showing a state in which the rear door is opened to its maximum opening angle;
FIG. 10 is an explanatory diagram showing a state of the door checker for the rear door as it is opened to the maximum opening angle;
FIG. 11 is an explanatory diagram showing how the front door and the rear door swing when opened and closed;
FIG. 12 is an explanatory side view of the front door and the rear door;
FIG. 13 is a side view particularly showing an alternative rear door structure in one varied form of the embodiment; and
FIG. 14 is an explanatory diagram showing an example of a conventional side door structure of a vehicle.

### DETAILED DESCRIPTION OF THE PREFERRED EMBODIMENTS OF THE INVENTION

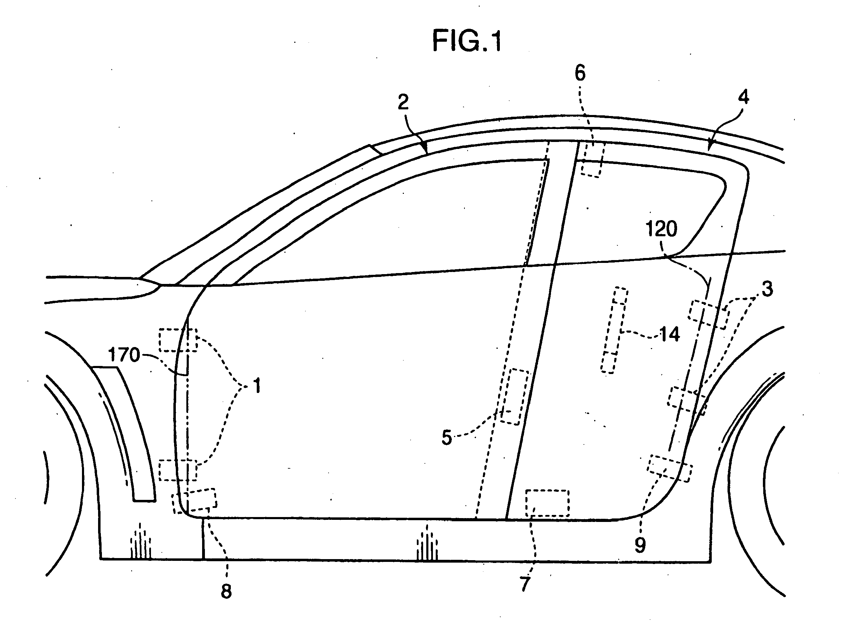

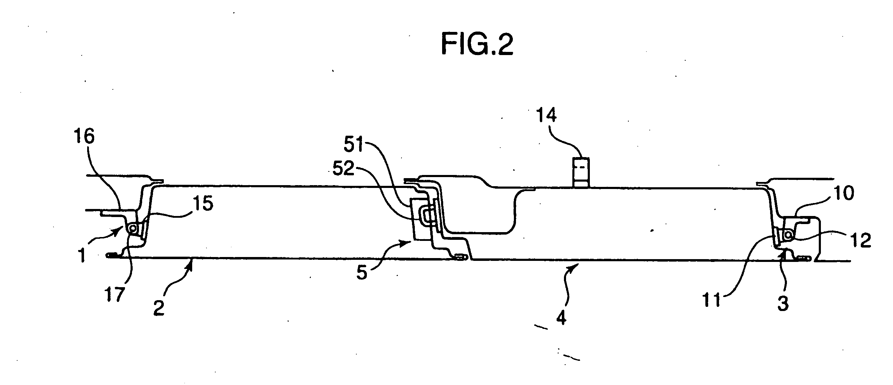

FIGS. 1 and 2 are diagrams showing a side door structure of a vehicle according to a specific embodiment of the invention. The side door structure includes left and right front doors 2 each supported by a pair of upper and lower door hinges 1 located at their front ends and left and right rear doors 4 each supported by a pair of upper and lower door hinges 3 located at their rear ends. The front and rear doors 2, 4 covering front and rear openings formed in both side walls of a vehicle body can be swung about the respective door hinges 1, 3 between their closed and open positions. More specifically, the side door structure of the embodiment is a two-way opening side door structure in which the front doors 2 are opened frontward and the rear doors 4 are opened rearward.

The front door 2 on each side of the vehicle is retained in the closed position as it is interlocked with the rear door 4 by a door lock 5 which includes a door latch 51 provided at a rear end of the front door 2 and a striker 52 provided at a front end of the rear door 4. On the other hand, the rear door 4 on each side of the vehicle is retained in the closed position by a pair of upper and lower door locks 6, 7 provided between the rear door 4 and the vehicle body. There is provided a door checker 8 at a lower front position of the front door 2 for holding the front door 2 at a fixed position when it has reached a specific opening angle. Likewise, there is provided a door checker 9 at a lower rear position of the rear door 4 for holding the rear door 4 at a fixed position when it has reached a specific opening angle.

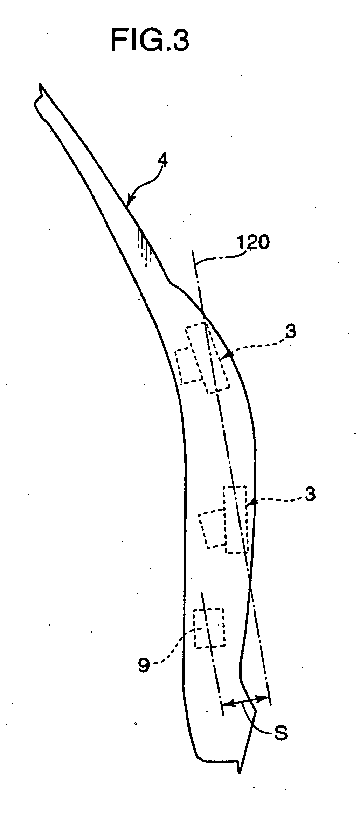

The door hinges 3 supporting the rear door 4 each include a metallic hinge leaf 10 affixed to a rear wall surface of the rear door 4, a metallic hinge leaf 11 affixed to a rear side of a peripheral surface of the rear opening formed in the vehicle body, and a hinge pin 12 joining the hinge leaves 10, 11. A vehicle occupant can open and close the rear door 4 while holding an inner door handle 14 located a specific distance rearward from the front end of the rear door 4. The rear door 4 swings between its closed and open positions about the hinge pins 12 of the upper and lower door hinges 3. The upper and lower door hinges 3 are mounted in such a way that an axis line 120 of each hinge pin 12 is inclined sideways as viewed from the front of the vehicle so that an upper end of each hinge pin 12 is located slightly inward toward a center line of the vehicle body as shown in FIG. 3 and the axis line 120 of each hinge pin 12 is inclined so that the upper end of each hinge pin 12 is located slightly to the rear of the vehicle body in side view as shown in FIG. 1.

Likewise, the door hinges 1 supporting the front door 2 each include a metallic hinge leaf 15 affixed to a front wall surface of the front door 2, a metallic hinge leaf 16 affixed to a frontal part of a peripheral surface of the front opening formed in the vehicle body, and a hinge pin 17 joining the hinge leaves 15, 16. The front door 2 swings between its closed and open positions about the hinge pins 17 of the upper and lower door hinges 1. Like the door hinges 3 of the rear door 4, the upper and lower door hinges 1 supporting the front door 2 are mounted in such a way that an axis line 170 of each hinge pin 17 is inclined sideways as viewed from the front of the vehicle so that an upper end of each hinge pin 17 is located slightly inward toward the center line of the vehicle body and the hinge pin 170 of each hinge pin 17 is oriented generally vertically in side view as shown in FIG. 1.

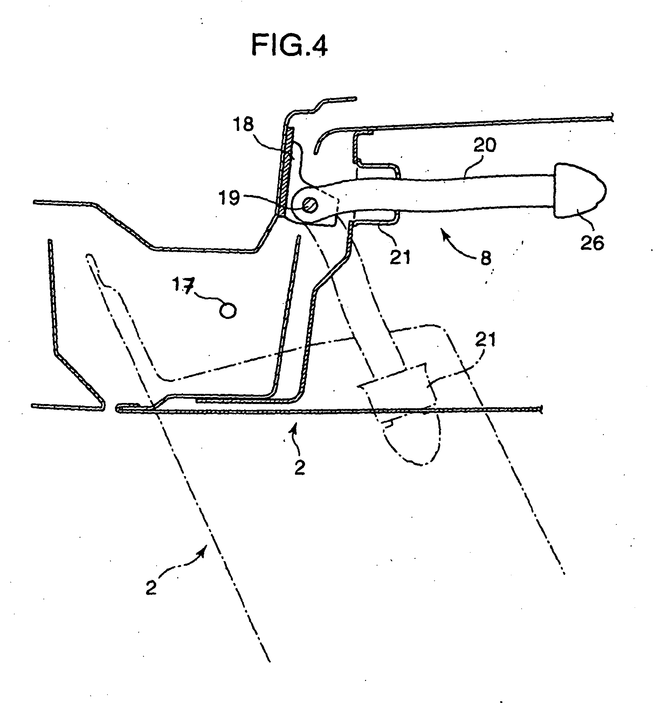

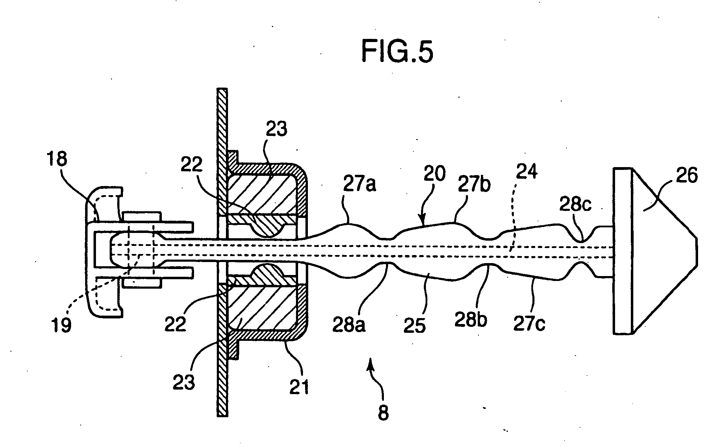

The door checker 8 for the front door 2 includes a bracket 18 attached to the vehicle body at a position facing the front wall surface of the front door 2, a checker plate 20 supported swingably about a support pin 19 fitted in the bracket 18, and a boxlike holder 21 affixed inside a frontal part of the front door 2 as shown in FIG. 4. The holder 21 contains a pair of upper and lower clamping parts 22 and a pair of elastic members 23 forcing the upper and lower clamping parts 22 toward each other as shown in FIG. 5.

The checker plate 20 has a core 24 made of a steel plate, for example, a sheathing 25 made of synthetic resin covering the core 24 and a stopper 26 provided at an extreme end of the checker plate 20. When the checker plate 20 is set in position through a hole in the holder 21 as illustrated, the upper and lower clamping parts 22 grasp the checker plate 20 from both top and bottom sides of the checker plate 20 due to biasing forces exerted by the elastic members 23. The thickness of the checker plate 20 is varied along a longitudinal direction of the checker plate 20 so that there are formed alternate protruding portions (protuberances) 27a, 27b, 27c and narrowed portions (recesses) 28a, 28b, 28c on the top and bottom sides of checker plate 20.

As the occupant opens or closes the front door 2, the holder 21 slides along the length of the checker plate 20. In the door checker 8 constructed as described above, the amount of friction of sliding exerted by the upper and lower clamping parts 22 on top and bottom surfaces of the checker plate 20 due to the biasing forces of the elastic members 23 varies with the opening angle of the front door 2.

The support pin 19 of the door checker 8 is located at a position offset inward toward the center line of the vehicle body by a specific distance from the location of the hinge pin 17 as shown in the plan view of FIG. 4. Therefore, as the occupant swings the front door 2 about the hinge pins 17 from the closed position shown by solid lines in FIG. 4 to the open position shown by dot-and-dash lines, and vice versa, the holder 21 moves together with the front door 2 and the checker plate 20 swings about the support pin 19 as shown by solid and dot-and-dash lines. Since a supporting point (or an axis line of the support pin 19) about which the checker plate 20 swings is offset from a supporting point (or an axis line of the hinge pin 17) about which the front door 2 swings as described above, the holder 21 shifts sliding along the length of the checker plate 20 when the occupant swings the front door 2.

When the holder 21 slides along the checker plate 20, the upper and lower clamping parts 22 contained in the holder 21 slide over the protuberances 27a, 27b, 27c toward the successive recesses 28a, 28b, 28c formed on the top and bottom surfaces of the checker plate 20. During this sliding process, sloping surfaces of the individual recesses 28a, 28b, 28c force the upper and lower clamping parts 22 upward and downward, compressing the upper and lower elastic members 23, respectively. Consequently, there occurs friction of sliding corresponding to the biasing forces exerted by the elastic members 23. The biasing forces of the elastic members 23 act in directions in which the upper and lower clamping parts 22 are caused to drop into the individual recesses 28a, 28b, 28c. Thus, when the clamping parts 22 have dropped into any pair of these recesses 28a, 28b, 28c and the front door 2 is not pushed further outward in its opening action, the upper and lower clamping parts 22 pushed by the elastic members 23 exert a particular restraining force on the checker plate 20, so that the front door 2 is kept at an opening angle corresponding to which recesses 28a, 28b, 28c the clamping parts 22 have dropped in.

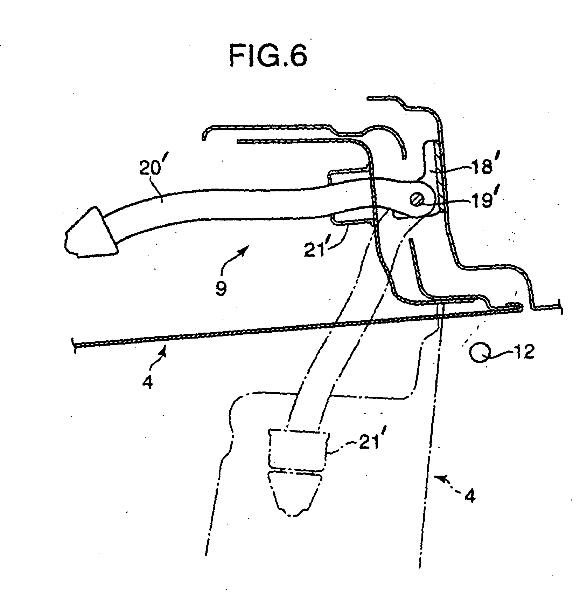

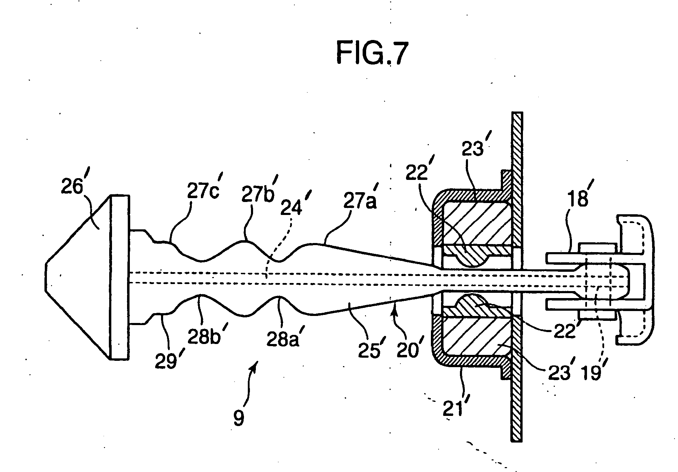

Likewise, the door checker 9 for the rear door 4 includes a bracket 18' attached to the vehicle body at a position facing the rear wall surface of the rear door 4, a checker plate 20' supported swingably about a support pin 19' fitted in the bracket 18', and a boxlike holder 21' affixed inside a rear part of the rear door 4 as shown in FIG. 6. The holder 21' contains a pair of upper and lower clamping parts 22' and a pair of elastic members 23' forcing the upper and lower clamping parts 22' toward each other as shown in FIG. 7.

The checker plate 20' of the door checker 9 for the rear door 4 differs from the checker plate 20 of the door checker 8 for the front door 2 mainly in that a pair of protuberances 27c' (upper and lower) formed close to an extreme end of the checker plate 20' widens toward a stopper 26' forming a large-diameter portion 29' at a terminal part of the checker plate 20' without forming any recesses 28c. The checker plate 20' of the door checker 9 for the rear door 4 is otherwise constructed generally in the same fashion as the checker plate 20' of the door checker 8 for the front door 2. Also, the door checker 9 for the rear door 4 functions in a similar way as the door checker 8 for the front door 2.

If an occupant on a rear seat intends to open the rear door 4 from the closed position, the occupant first undoes the door lock 5 to unlock the front door 2 and opens the front door 2 to a specific angle. Then, after releasing the upper and lower door locks 6, 7 of the rear door 4, the occupant opens the rear door 4 while holding the inner door handle 14 such that the front end of the rear door 4 swings outward from the vehicle body.

When the front and rear doors 2, 4 reach specific opening angles as they are being opened, the doors 2, 4 are held at the respective opening angles by restraining forces exerted by the door checkers 8, 9 on the respective doors 2, 4.

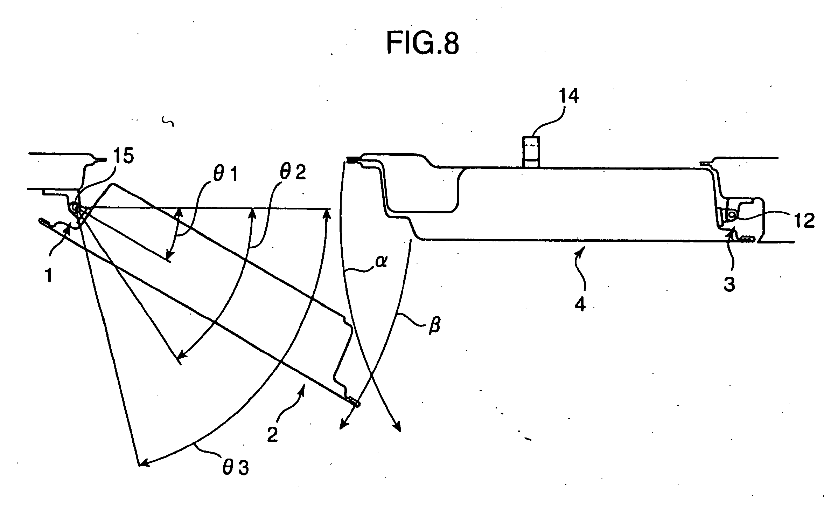

More specifically, the door checker 8 for the front door 2 is constructed such that when the front door 2 reaches a position of its minimum opening angle θ1 located slightly on the outside of a swing trajectory α of the front end of the rear door 4, the clamping parts 22 of the door checker 8 reach the location of the first recesses 28a (among the first to third recesses 28a, 28b, 28c) formed on the checker plate 20 of the door checker 8 closest to the support pin 19, whereby the front door 2 is held at the minimum opening angle θ1 as shown in FIG. 8. When the front door 2 is further opened and the clamping parts 22 reach the location of the second recesses 28b situated at about the middle of the length of the checker plate 20, the front door 2 is held at its medium opening angle θ2 which is convenient for a front seat occupant to get into and out of the vehicle. Then, when the front door 2 is further opened and the clamping parts 22 reach the location of the third recesses 28c situated near the extreme end of the checker plate 20, the front door 2 is held at its maximum opening angle θ3.

On the other hand, the door checker 9 for the rear door 4 is constructed such that when the rear door 4 reaches a position of its minimum opening angle located slightly on the outside of a swing trajectory β of the rear end of the front door 2, the clamping parts 22' of the door checker 9 reach the location of the first recesses 28a' formed on the checker plate 20' of the door checker 9 closest to the support pin 19', whereby the rear door 4 is held at the minimum opening angle. When the rear door 4 is further opened and the clamping parts 22' reach the location of the second recesses 28b' formed on the checker plate 20', the rear door 4 is held at its medium opening angle which is convenient for a rear seat occupant to get into and out of the vehicle. Then, when the rear door 4 is further opened and the clamping parts 22' reach the location of the large-diameter portion 29' situated near the extreme end of the checker plate 20', the rear door 4 is held at its maximum opening angle.

The aforementioned side door structure, in which the openings formed in each side wall of the vehicle body are covered by the front door 2 swingably supported by the upper and lower door hinges 1 located at the front end of the front door 2 and by the rear door 4 swingably supported by the upper and lower door hinges 3 located at the rear end of the rear door 4, is provided with the door checker 8 for holding the front door 2 in its open position which is located on the outside of but close to the swing trajectory α of the front end of the rear door 4 as shown in FIG. 8. This structure is advantageous in that the rear door 4 can be opened with ease and safety.

Before opening the rear door 4, the occupant slightly opens the front door 2 up to a point where the door checker 8 holds the front door 2 outside but close to the swing trajectory α of the front end of the rear door 4. As a result, the rear door 4 can be opened without interfering with the rear end of the front door 2. Therefore, the rear seat occupant can open the rear door 4 with ease and safety without the need to take such intricate and painstaking action as stretching out to the front door 2 and opening it unnecessarily widely when getting out of the vehicle.

In the present embodiment, the door checker 8 holds the front door 2 at three (first to third) positions. The first front door hold position at the minimum opening angle θ1 where the door checker 8 holds the front door 2 when the clamping parts 22 have reached the location of the first recesses 28a formed on the checker plate 20 of the door checker 8 closest to the support pin 19 is located on the outside of but close to the swing trajectory α of the front end of the rear door 4. In this structure, the door checker 8 holds the front door 2 at the position corresponding to the minimum opening angle θ1 when the occupant slightly opens the front door 2 before opening the rear door 4. This arrangement enables the occupant to open the rear door 4 without causing the front end of the rear door 4 to interfere with the rear end of the front door 2.

The second front door hold position where the door checker 8 holds the front door 2 when the clamping parts 22 have reached the location of the second recesses 28b at about the middle of the length of the checker plate 20 is located at a position corresponding to the medium opening angle θ2 convenient for the front seat occupant to get into and out of the vehicle, and the third front door hold position where the door checker 8 holds the front door 2 when the clamping parts 22 have reached the location of the third recesses 28c near the extreme end of the checker plate 20 is located at a position corresponding to the maximum opening angle θ3. This arrangement is advantageous in that the front seat occupant can easily get into and out of the vehicle with the front door 2 held at the medium opening angle θ2 of the front door 2 and luggage can be easily loaded into and unloaded from the vehicle interior with the front door 2 held at the maximum opening angle θ3.

While the door checker 8 holds the front door 2 at the three hold positions in this embodiment, the invention is not limited thereto but may be modified in various ways. For example, three or more front door hold positions may be provided on the outside of the minimum opening angle θ1 or only one front door hold position may be provided on the outside of the minimum opening angle θ1.

In the aforementioned embodiment of the invention, the position of the minimum opening angle at which the door checker 9 holds the rear door 4 when the clamping parts 22' have reached the location of the first recesses 28a' formed on the checker plate 20' of the door checker 9 closest to the support pin 19' is located slightly on the outside of the swing trajectory β of the rear end of the front door 2. This arrangement is advantageous in that it effectively prevents the front door 2 from interfering with the rear door 4 when the occupant opens and closes the front door 2 with the rear door 4 held at its minimum opening angle.

According to the embodiment, a rear door hold position where the door checker 9 holds the rear door 4 when the clamping parts 22' have reached the location of the second recesses 28b' formed on the checker plate 20' is located at a position corresponding to the medium opening angle convenient for the rear seat occupant to get into and out of the vehicle. This arrangement permits the rear seat occupant to easily get into and out of the vehicle with the rear door 4 held at the medium opening angle. In addition, a rear door hold position where the door checker 9 holds the rear door 4 when the clamping parts 22' have reached the location of the large-diameter portion 29 formed near the extreme end of the checker plate 20' is located at a position corresponding to the maximum opening angle of the rear door 4. This is advantageous in that the luggage can be easily loaded into and unloaded from the vehicle interior with the rear door 4 opened up to the maximum opening angle.

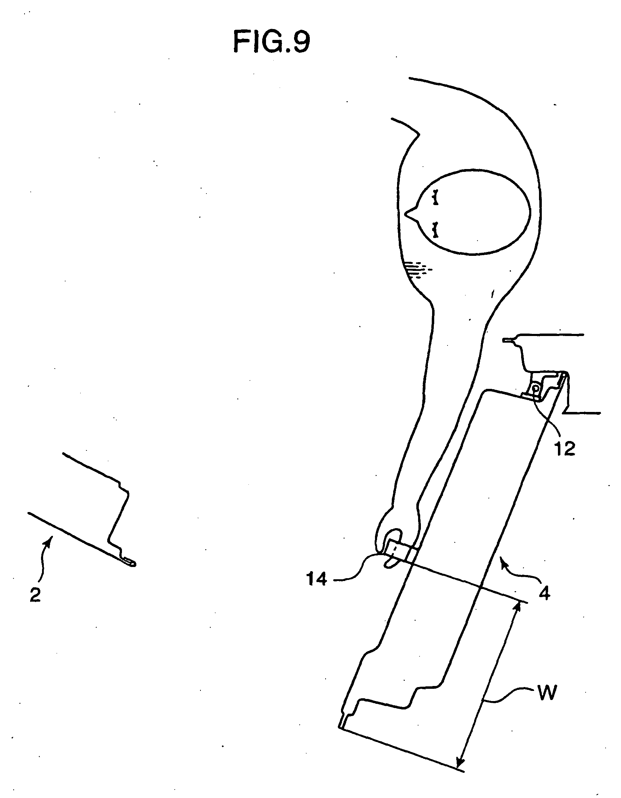

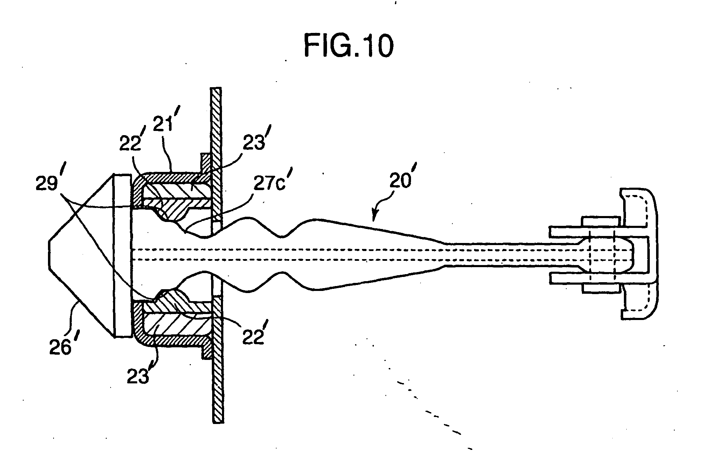

As illustrated in the foregoing discussion of the embodiment, there is formed the large-diameter portion 29' near the extreme end of the checker plate 20' of the door checker 9 for the rear door 4 and, when the rear door 4 has reached its maximum opening angle shown in FIG. 9, the clamping parts 22' contained in the holder 21' slide onto the large-diameter portion 29' of the checker plate 20' as shown in FIG. 10, whereby the door checker 9 holds the rear door 4 at the maximum opening angle. This arrangement is advantageous in that the occupant can easily close the rear door 4 from its maximum opening angle.

More specifically, when the clamping parts 22' of the door checker 9 are situated on the large-diameter portion 29' as shown in FIG. 10, the elastic members 23' are compressed so much that a large amount of elastic strain energy is stored in the elastic members 23'. Therefore, if the rear door 4 is moved from the maximum opening angle in its closing direction even by a small amount, the clamping parts 22' slide along sloping surfaces of the protuberances 27c', which widen toward the extreme end of the checker plate 20', thereby producing a large amount of assisting force to bias the rear door 4 in the closing direction. Therefore, the rear seat occupant can close the rear door 4 from its maximum opening angle relatively easily, although it is generally rather difficult for reasons related to the human physical structure for the rear seat occupant to apply a large force to the rear door 4 in its closing direction when closing it from the maximum opening angle by holding the inner door handle 14.

According to the embodiment, the inner door handle 14 used for opening and closing the rear door 4 is located a specific distance W to the rear of the vehicle body from the front end of the rear door 4. This arrangement is advantageous for the rear seat occupant when closing the rear door 4 from its maximum open position shown in FIG. 10. Specifically, the rear seat occupant can easily swing the rear door 4 from the open position to the closed position while holding the inner door handle 14 in a natural posture without the need to stretch the arm for gripping the inner door handle 14.

Also, the door checker 9 is located below the door hinges 3 swingably supporting the rear door 4 in the embodiment. This arrangement makes it possible to determine the location of the door checker 9 with a large degree of freedom, so that the door checker 9 can be installed at a proper position. Specifically, while a door checker is generally located between upper and lower door hinges fixed to the rear end of the rear door, this ordinary arrangement provides a considerably limited degree of freedom in the location of the door checker due to limitations in space available between the upper and lower door hinges. By comparison, a sufficient space is available below the door hinges 3, so that the arrangement of the embodiment makes it possible to install the door checker 9 with a sufficiently large degree of freedom in its location. Also, the checker plate 20 having an increased overall length, and thus having a large moving stroke, can be installed in the aforementioned space below the door hinges 3 of the rear door 4. This is advantageous in that the maximum opening angle of the rear door 4 restricted by the door checker 9 can be increased.

In this embodiment, the hinge pin 12 of each door hinge 3 affixed to the rear door 4 is inclined as viewed from the front of the vehicle so that the upper end of the hinge pin 12 is located slightly inward toward the center line of the vehicle body, and the hinge pin 12 of each door hinge 3 is inclined so that the upper end of the hinge pin 12 is located slightly to the rear of the vehicle body in side view. This arrangement is advantageous in that the rear door 4 can be opened with a small force while avoiding interference between the front end of the rear door 4 and the rear end of the front door 2 and held at an open position of a specific opening angle by means of the door checker 9 which exerts a small restraining force on the rear door 4.

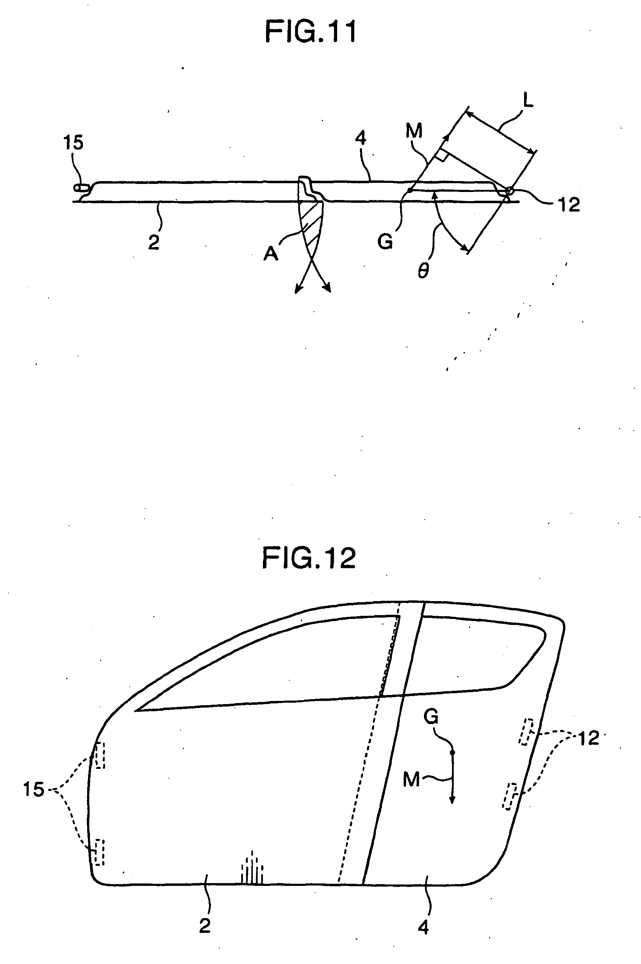

Since the hinge pin 12 of each door hinge 3 of the rear door 4 is inclined such that the upper end of the hinge pin 12 is located slightly inward toward the center line of the vehicle body as stated above, it is possible to prevent an upper portion of the rear door 4 from being greatly shifted towards inward from the axis line 120 of the hinge pin 12. Also, when swinging the rear door 4 from the closed position to the open position about the hinge pins 12, it is possible to prevent the front end of the rear door 4 from shifting frontward too much. Compared to the earlier-mentioned example of the conventional side door structure shown in FIG. 14, in which the hinge pins 12a are mounted in a vertical position as viewed from the side of the vehicle, it is possible to significantly decrease an area "A" of overlap between the rear end of the front door 2 and the front end of the rear door 4 as viewed along an axial direction of the hinge pins 12 which are inclined as stated above, as shown in FIG. 11. This arrangement effectively prevents interference between the front door 2 and the rear door 4.

Also, since the hinge pin 12 of each door hinge 3 of the rear door 4 is inclined so that the upper end of the hinge pin 12 is located slightly to the rear of the vehicle body in side view, it is possible to reduce the length L of an arm of moment acting on the rear door 4 in its closing direction about the axis line 120 of the hinge pins 12 passing through the center of gravity G of the rear door 4 due to its own weight M, compared to a case where the hinge pin 12 of each door hinge 3 is vertically mounted in side view. This makes it possible to effectively reduce a swinging force needed in an initial stage of opening the rear door 4. Moreover, since the moment acting on the rear door 4 in its closing direction becomes zero at a point where the rear door 4 is opened to a specific angle θ which is smaller than 90 degrees and an acting direction of the weight M of the rear door 4 matches a direction of inclination of the hinge pin 12 of each door hinge 3 as shown in FIG. 11, it is also possible to effectively reduce a swinging force needed in a final stage of opening the rear door 4. While the own weight M of the rear door 4 passing through its center of gravity G acts in a vertical direction, a line showing the direction in which the weight M of the rear door 4 acts is inclined as illustrated in FIG. 11. This is because FIG. 11 shows the side door structure as viewed along the axial direction of the hinge pins 12, that is, as if cut by a plane intersecting the axis line 120 of the hinge pins 12 at right angles thereto.

When the door checker 9 is located more inward toward the center line of the vehicle body than the hinge pins 12 which are inclined such that their upper ends are located slightly inward toward the center line of the vehicle body as shown in FIG. 3, the axis line 120 of the hinge pins 12 is offset so much from the location of the door checker 9 that a sufficient distance S can be ensured between the locations of the hinge pins 12 and the location of the door checker 9 as viewed along the axis line 120. It is therefore possible to obtain a large resisting moment which is given as the product of the restraining force exerted by the door checker 9 when the rear door 4 is opened or closed and the aforementioned distance S. Consequently, the door checker 9 can hold the rear door 4 at specific opening angles in a stable fashion even when the restraining force exerted by the door checker 9 is small.

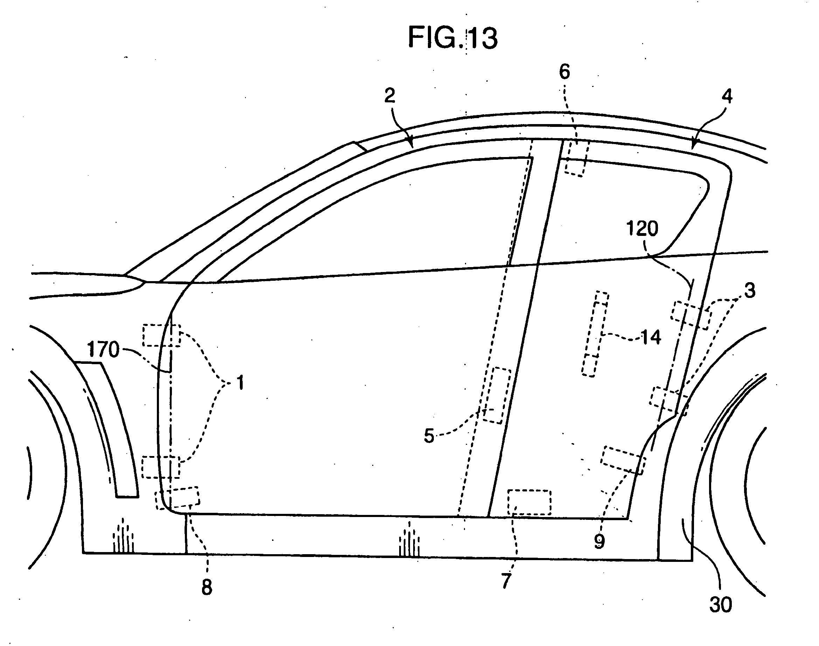

FIG. 13 is a side view showing an alternative side door structure in one varied form of the foregoing embodiment. This variation of the embodiment, applied to a vehicle in which rear doors 4 are located at the front of wheel arches (curved exterior portions of left and right tire houses) 30 for rear wheels, is constructed such that a door checker 9 for each rear door 4 is located at a position offset frontward from the locations of hinge pins 12 of door hinges 3. This structure is advantageous in that the door checker 9 can be installed at a proper position and effectively produce a specific resisting moment during the opening of the rear door 4 while avoiding interference between the wheel arch 30 and the door checker 9.

In summary, a side door structure of the invention is applicable to a vehicle of which side openings are covered by a front door swingably supported by a door hinge located at the front of the front door and by a rear door swingably supported by a door hinge located at the rear of the rear door. The side door structure includes a door checker for holding the front door at an open position situated on the outside of but close to a swing trajectory of the rear door.

The door checker of this side door structure holds the front door at the open position situated slightly on the outside of the swing trajectory of the rear door. This structure effectively prevents a front end of the rear door from interfering with a rear end of the front door when an occupant opens the rear door.

According to one feature of the invention, the side door structure may be such that the door checker can hold the front door at multiple open positions, and the open position where the front door is held at a minimum opening angle is situated on the outside of but close to the swing trajectory of the rear door.

As the side door structure thus configured can hold the front door at the open position of the aforementioned minimum opening angle situated slightly on the outside of the swing trajectory of the rear door, it is possible to effectively prevent the front end of the rear door from interfering with the rear end of the front door when the occupant opens the rear door.

According to another feature of the invention, the side door structure may be such that the door checker can hold the front door at least at two open positions situated at opening angles larger than the minimum opening angle.

As the side door structure thus configured can hold the front door at the open position of the aforementioned minimum opening angle, it is possible to effectively prevent the front end of the rear door from interfering with the rear end of the front door when the occupant opens the rear door. In addition, since the side door structure can hold the front door at the opening angles larger than the minimum opening angle, a front seat occupant can easily get into and out of the vehicle and luggage can be easily loaded into and unloaded from the vehicle interior.

According to still another feature of the invention, the side door structure further includes a door checker for holding the rear door at an open position situated on the outside of but close to a swing trajectory of the front door.

The door checker for the rear door of this side door structure holds the rear door at the open position situated slightly on the outside of the swing trajectory of the front door. This structure effectively prevents the rear end of the front door from interfering with the front end of the rear door when the occupant opens the front door.

Overall, the door checker for the front door holds it at the aforementioned open position situated slightly on the outside of the swing trajectory of the rear door before the occupant opens the rear door. Thus, the side door structure of the invention enables the occupant to open the rear door with ease and safety without causing the front end of the rear door to interfere with the rear end of the front door.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined by the claims, they should be construed as being included therein.

## Claims

1. A side door structure of a vehicle of which side openings are covered by a front door (2) swingably supported by a door hinge (1) located at the front of the front door (2) and by a rear door (4) swingably supported by a door hinge (3) located at the rear of the rear door (4), **characterized in that** said side door structure comprises:
a front door checker (8) for holding the front door (2) at an open position situated on the outside of but close to a swing trajectory of the rear door (4).

2. The side door structure according to claim 1, wherein the front door checker (8) can hold the front door (2) at multiple open positions, and the open position where the front door (2) is held at a minimum opening angle is situated on the outside of but close to the swing trajectory of the rear door (4).

3. The side door structure according to claim 2, wherein the front door checker (8) can hold the front door (2) at least at two open positions situated at opening angles larger than the minimum opening angle.

4. The side door structure according to one of claims 1 to 3 further comprising:
a rear door checker (9) for holding the rear door (4) at an open position situated on the outside of but close to a swing trajectory of the front door (2).

5. The side door structure according to one of the preceding claims, wherein the front door checker (8) includes a bracket (18) fixed to a vehicle body; a holder (21) fixed inside a frontal part of the front door (2); and a front checker plate (20) having one end pivotally mounted on the bracket (18) and the other end (26) and a main body extending between said one end and the other end (26), extending through an opening formed in the holder (21).

6. The side door structure according to claim 5, wherein said main body portion of the front checker plate (20) has a plurality of protruding portions (27a, 27b) and a plurality of recessed portions (28a, 28b, 28c) along the extending direction of the main body and a clamping member (22) is provided in the holder (21) such that said clamping member (22) has a portion which is in press-contact with the main body of the front checker plate (20).

7. The side door structure according to claim 6, wherein the clamping member (22) is provided at an upper and a lower portions in the holder (21), an elastic member (23) is interposed between the top inner wall of the holder (21) and the upper clamping member (22) and between the bottom inner wall of the holder (21) and the lower clamping member (22) such that said main body of the front checker plate (20) is interposed between the upper clamping member (22) and the lower clamping member (22).

8. The side door structure according to claim 4 or claims 5, 6 and 7 provided that they are directly or indirectly based on claim 4, wherein the rear door checker (9) includes a bracket (18') fixed to a vehicle body; a holder (21') fixed inside a rear part of the rear door (4); and a rear checker plate (20') having one end pivotally mounted on the bracket (18') and the other end (26') and a main body extending between said one end and the other end (26'), extending through an opening formed in the holder (21').

9. The side door structure according to claim 8, wherein said main body portion of the rear checker plate (20') has a plurality of protruding portions (27a', 27b', 27c') and a plurality of recessed portions (28a', 28b') along the extending direction of the main body and a clamping member (22') is provided in the holder (21') such that said clamping member (22') has a portion which is in press-contact with the main body of the rear checker plate (20').

10. The side door structure according to claim 9, wherein the clamping member (22') is provided at an upper and a lower portions in the holder (21'), an elastic member (23') is interposed between the top inner wall of the holder (21') and the upper clamping member (22') and between the bottom inner wall of the holder (21') and the lower clamping member (22') such that said main body of the rear checker plate (20') is interposed between the upper clamping member (22') and the lower clamping member (22').

## Patentansprüche

1. Seitentürstruktur eines Fahrzeugs, bei der die Seitenöffnungen bedeckt sind von einer Fronttür (2), die schwenkbar von einem Türgelenk bzw. Scharnier (1) gehalten wird, das sich auf der Vorderseite der Fronttür (2) befindet, und von einer Hintertür (4), die schwenkbar von einem Türscharnier (3) gehalten wird, das sich auf der Hinterseite der Hintertür (4) befindet, **dadurch gekennzeichnet, dass** die Seitentürstruktur umfasst:
einen Fronttürfänger (8) zum Halten der Fronttür (2) in einer offenen Position, der sich außerhalb aber nahe einer Schwenkkurve der Hintertür (4) befindet.

2. Seitentürstruktur eines Fahrzeugs nach Anspruch 1, wobei der Fronttürfänger (8) die Fronttür (2) in mehreren offenen Position halten kann, und die offene Position, in der die Fronttür (2) in einem minimalen Öffnungswinkel gehalten wird, sich außerhalb aber nahe einer Schwenkkurve der Hintertür (4) befindet.

3. Seitentürstruktur eines Fahrzeugs nach Anspruch 2, wobei der Fronttürfänger (8) die Fronttür (2) in wenigstens zwei offenen Position halten kann, die sich in Öffnungswinkeln befinden, die größer als der minimale Öffnungswinkel sind.

4. Seitentürstruktur eines Fahrzeugs nach einem der Ansprüche 1 bis 3, die ferner umfasst:
einen Hintertürfänger (9) zum Halten der Hintertür (4) in einer offenen Position, der sich außerhalb aber nahe einer Schwenkkurve der Fronttür (2) befindet.

5. Seitentürstruktur eines Fahrzeugs nach einem der vorangehenden Ansprüche, wobei der Fronttürfänger (8) umfasst:
eine an einer Fahrzeugkarosserie befestigte Halteklammer (18); eine im Inneren eines stirnseitigen Teils der Fronttür (2) befestigte Halterung (21); und eine Fronttürfängerplatte (20), bei der ein Ende schwenkbar auf der Halteklammer (18) montiert ist und das andere Ende (26) und einen Hauptkörperteil, der sich zwischen dem einen Ende und dem anderen Ende (26) erstreckt, sich durch eine in der Halterung (21) ausgebildete Öffnung erstrecken.

6. Seitentürstruktur eines Fahrzeugs nach Anspruch 5, wobei der Hauptkörperteil der Fronttürfängerplatte (20) eine Vielzahl von vorstehenden Abschnitten (27a, 27b) und eine Vielzahl von vertieften Abschnitten (28a, 28b, 28c) entlang der Verlaufsrichtung des Hauptkörpers hat und ein Klemmelement (22) in der Halterung (21) bereitgestellt ist, so dass das Klemmelement (22) einen Abschnitt hat, der in Presskontakt mit dem Hauptkörper der Frontfängerplatte (20) ist.

7. Seitentürstruktur eines Fahrzeugs nach Anspruch 6, wobei das Klemmelement (22) an einem oberen und einem unteren Abschnitt in der Halterung (21) bereitgestellt ist, ein elastisches Element (23) zwischen der oberen Innenwand der Halterung (21) und dem oberen Klemmelement (22) und zwischen der unteren Innenwand der Halterung (21) und dem unteren Klemmelement (22) eingefügt ist, so dass der Hauptkörper der Frontfängerplatte (20) zwischen dem oberen Klemmelement (22) und dem unteren Klemmelement (22) eingefügt ist.

8. Seitentürstruktur eines Fahrzeugs nach Anspruch 4 oder den Ansprüchen 5, 6 und 7, sofern sie direkt oder indirekt auf Anspruch 4 basieren, wobei der Hintertürfänger (9) umfasst: eine an einer Fahrzeugkarosserie befestigte Halteklammer (18'); eine im Inneren eines Hinterteils der Hintertür (4) befestigte Halterung (21'); und eine Hintertürfängerplatte (20'), bei der ein Ende schwenkbar auf der Halteklammer (18') montiert ist und das andere Ende (26') und einen Hauptkörperteil, der sich zwischen dem einen Ende und dem anderen Ende (26') erstreckt, sich durch eine in der Halterung (21') ausgebildete Öffnung erstrecken.

9. Seitentürstruktur eines Fahrzeugs nach Anspruch 8, wobei der Hauptkörperteil der Hintertürfängerplatte (20') eine Vielzahl von vorstehenden Abschnitten (27a', 27b', 27c') und eine Vielzahl von vertieften Abschnitten (28a', 28b') entlang der Verlaufsrichtung des Hauptkörpers hat und ein Klemmelement (22') in der Halterung (21') bereitgestellt ist, so dass das Klemmelement (22') einen Abschnitt hat, der in Presskontakt mit dem Hauptkörper der hinteren Fängerplatte (20') ist.

10. Seitentürstruktur eines Fahrzeugs nach Anspruch 9, wobei das Klemmelement (22') an einem oberen und einem unteren Abschnitt in der Halterung (21') bereitgestellt ist, ein elastisches Element (23') zwischen der oberen Innenwand der Halterung (21') und dem oberen Klemmelement (22') und zwischen der unteren Innenwand der Halterung (21') und dem unteren Klemmelement (22') eingefügt ist, so dass der Hauptkörper der hinteren Fängerplatte (20') zwischen dem oberen Klemmelement (22') und dem unteren Klemmelement (22') eingefügt ist.

## Revendications

1. Structure de portière latérale pour un véhicule dont les ouvertures latérales sont couvertes par une portière avant (2), soutenue avec faculté de pivotement par une charnière de portière (1) placée à l'avant de la portière avant (2) et par une portière arrière (4) soutenue avec faculté de pivotement par une charnière de portière (3) placée à l'arrière de la portière arrière (4), **caractérisée en ce que** la structure de portière latérale comprend :
une butée de portière avant (8) afin de maintenir la portière avant (2) sur une position ouverte située à l'extérieur, mais à proximité d'une trajectoire de pivotement de la portière arrière (4).

2. Structure de portière latérale selon la revendication 1, dans laquelle la butée de portière avant (8) peut maintenir la portière avant (2) sur des positions ouvertes multiples, et dans laquelle la position ouverte sur laquelle est maintenue la portière avant (2) sous un angle d'ouverture minimal est située à l'extérieur, mais à proximité d'une trajectoire de pivotement de la portière arrière (4).

3. Structure de portière latérale selon la revendication 2, dans laquelle la butée de portière avant (8) peut maintenir la portière avant (2) au moins sur deux positions ouvertes situées sur des angles d'ouverture qui sont plus grands que l'angle d'ouverture minimal.

4. Structure de portière latérale selon l'une des revendications 1 à 3, comprenant en outre :
une butée de portière arrière (9) afin de maintenir la portière arrière (4) sur une position ouverte située à l'extérieur, mais à proximité d'une trajectoire de pivotement de la portière avant (2).

5. Structure de portière latérale selon l'une des revendications précédentes, dans laquelle la butée de portière avant (8) inclut un support (18) fixé sur une carrosserie de véhicule; une poignée (21) fixée à l'intérieur d'une partie avant de la portière avant (2); et une plaquette de butée avant (20) ayant une extrémité montée avec faculté de pivotement sur le support (18) et sur l'autre extrémité (26), et un corps principal s'étendant entre ladite une extrémité et l'autre extrémité (26), s'étendant à travers une ouverture ménagée dans la poignée (21).

6. Structure de portière latérale selon la revendication 5, dans laquelle ladite partie de corps principal de la plaquette de butée avant (20) a une pluralité de parties en saillie (27a, 27b) et une pluralité de parties renfoncées (28a, 28b, 28c) le long de la direction d'extension du corps principal, et dans laquelle un élément de verrouillage (22) est prévu dans la poignée (21) de telle sorte que ledit élément de verrouillage (22) a une partie qui est en contact par pressage avec le corps principal de la plaquette de butée avant (20).

7. Structure de portière latérale selon la revendication 6, dans laquelle l'élément de verrouillage (22) est prévu sur une partie supérieure et sur une partie inférieure dans la poignée (21), dans laquelle un élément élastique (23) est interposé entre la paroi intérieure du haut de la poignée (21) et l'élément de verrouillage supérieur (22), et entre la paroi intérieure du bas de la poignée (21) et l'élément de verrouillage inférieur (22), de telle sorte que ledit corps principal de la plaquette de butée avant (20) est interposé entre l'élément de verrouillage supérieur (22) et l'élément de verrouillage inférieur (22).

8. Structure de portière latérale selon la revendication 4 ou selon les revendications 5, 6 et 7 à condition qu'elles soient basées directement ou indirectement sur la revendication 4, dans laquelle la butée de portière arrière (9) inclut un support (18') fixé sur une carrosserie de véhicule ; une poignée (21 ') fixée à l'intérieur d'une partie arrière de la portière arrière (4) ; et une plaquette de butée arrière (20') ayant une extrémité montée avec faculté de pivotement sur le support (18') et sur l'autre extrémité (26'), et un corps principal s'étendant entre ladite une extrémité et l'autre extrémité (26'), s'étendant à travers une ouverture ménagée dans la poignée (21').

9. Structure de portière latérale selon la revendication 8, dans laquelle ladite partie de corps principal de la plaquette de butée arrière (20') a une pluralité de parties en saillie (27a', 27b', 27c') et une pluralité de parties renfoncées (28a', 28b') le long de la direction d'extension du corps principal, et dans laquelle un élément de verrouillage (22') est prévu dans la poignée (21') de telle sorte que ledit élément de verrouillage (22') a une partie qui est en contact par pressage avec le corps principal de la plaquette de butée arrière (20').

10. Structure de portière latérale selon la revendication 9, dans laquelle l'élément de verrouillage (22') est prévu sur une partie supérieure et sur une partie inférieure dans la poignée (21'), dans laquelle un élément élastique (23') est interposé entre la paroi intérieure du haut de la poignée (21') et l'élément de verrouillage supérieur (22'), et entre la paroi intérieure du bas de la poignée (21') et l'élément de verrouillage inférieur (22'), de telle sorte que ledit corps principal de la plaquette de butée arrière (20') est interposé entre l'élément de verrouillage supérieur (22') et l'élément de verrouillage inférieur (22').
